# EUROPÄISCHE PATENTSCHRIFT

(11) **EP 0 782 783 B1**
(45) Veröffentlichungstag und Bekanntmachung des Hinweises auf die Patenterteilung: **10.06.1998**
(21) Anmeldenummer: 95932746.1
(22) Anmeldetag: 14.09.1995
(51) Int. Cl.: H02M 1/12, B60L 9/00

(54) **VERFAHREN ZUR REGELUNG EINES ALS NETZSTROMRICHTER FUNGIERENDEN VIERQUADRANTENSTELLERS**
PROCESS FOR REGULATING A FOUR-QUADRANT REGULATOR THAT WORKS AS MAINS POWER CONVERTER
PROCEDE DE REGULATION D'UN REGULATEUR A QUATRE QUADRANTS UTILE COMME CONVERTISSEUR DE PUISSANCE RESEAU

(30) Priorität: 15.09.1994 DE 4434378
(43) Veröffentlichungstag der Anmeldung: 09.07.1997
(73) Patentinhaber: ABB Daimler-Benz Transportation (Deutschland) GmbH, 16761 Hennigsdorf (DE)
(72) Erfinder: ENDRIKAT, Christian, D-13465 Berlin (DE)
(74) Vertreter: Hamilton, Eberhard, Dipl.- Ing.
(86) Internationale Anmeldenummer: EP9503615
(87) Internationale Veröffentlichungsnummer: WO9608862

(56) Entgegenhaltungen:
- EP-A- 0 585 173
- DE-A- 3 824 202
- DE-B- 2 112 580
- Patent Abstracts of Japan, Band 11, Nr 131(M-584); & JP,A,61273103 (TOSHIBA CORP), 1986-12-03

## Beschreibung

Die Erfindung bezieht sich auf ein Verfahren zur Regelung eines in Anwendung bei fahrleitungsgespeisten Drehstromlokomotiven als Netzstromrichter fungierenden Vierquadrantenstellers gemäß dem Oberbegriff des Anspruchs 1. Ein solches Verfahren ist durch die DE-A-38 24 202 bekannt.

Das bekannte Verfahren dient allein der Reduzierung der Welligkeit der Ausgangsgleichspannung des Vierquadrantenstellers bei nichtsinusförmiger Netzspannung. Dabei werden aus transformierten Größen des Fahrdrahtstromes und der Fahrdrahtspannung die komplexen Übersetzungsverhältnisse für den Strom und die Spannung der Harmonischen ermittelt, ohne daß auf die Netzrückwirkungen (Harmonische im Netzstrom) Einfluß genommen wird.

Fig. 2 zeigt den grundsätzlichen Aufbau eines Antriebssystems elektrischer Drehstromlokomotiven, wie er sich in verschiedenen Varianten allgemein etabliert hat.

Darin ist mit 1 ein Vierquadrantensteller bezeichnet, der mittels eines Mehrwicklungstransformators 2 und über einen Störfiltersatz 3 an ein Wechselspannungs-Fahrleitungsnetz 4 (Fahrdraht) mit z.B. 15 kV, 16 2/3 Hz angeschlossen ist. Der Vierquadrantensteller 1 fungiert als gepulster Netzstromrichter, der die transformierte Fahrleitungswechselspannung uN in eine geregelte Gleichspannung ud umformt und einen Gleichspannungszwischenkreis 5 speist. An diesen Gleichspannungszwischenkreis 5 sind Pulswechselrichter 6 angeschlossen, über die hier nicht näher dargestellte Asynchron-Fahrmotoren versorgt werden. Der Mehrwicklungstransformator 2 weist neben einer an der Fahrleitungsspannung uf liegenden Primärwicklung 7 und einer den Vierquadrantensteller 1 speisenden Sekundärwicklung 8 eine weitere Sekundärwicklung 9 für angeschlossene Hilfsbetriebeumrichter 10 auf. Mit 11 ist noch ein Stromabnehmer bezeichnet.

Der gesamte für die Traktion erforderliche Teil der Anordnung nach Fig. 2 wird in der Regel drehgestellweise zentral durch eine Antriebssteuerung gesteuert und geregelt. Die Steuerung der Hilfsbetriebeausrüstung erfolgt dagegen meist unabhängig über den/die Hilfsbetriebeumrichter 10.

Die Anordnung nach Fig. 2 stellt nur ein vereinfachtes Schema dar. Die angeführten Elemente wie Vierquadrantensteller 1, Pulswechselrichter 6 und Hilfsbetriebeumrichter 10 können mehrfach eingesetzt sein. Für den Einsatz von Vierquadrantenstellern als Netzstromrichter spricht die Möglichkeit der Rückspeisefähigkeit und daß sich damit ein Strom weitgehend beliebiger Phasenlage zur Fahrdrahtspannung einstellen läßt. Der Strom kann damit z.B. in Phase zur Netzspannung (oder 180° dazu beim Rückspeisen) geregelt werden.

Die Regelung des Vierquadrantenstellers 1 muß zumindest sicherstellen, daß die Zwischenkreisspannung ud weitgehend unabhängig von den Belastungsverhältnissen des Antriebs konstant gehalten wird und gleichzeitig auf der Netzseite ein Strom iq bzw. ift oder if definierter Phasenlage zur Netzspannung uf eingestellt wird.

Mit dem Vierquadrantensteller 1 wird dazu eine Stellerspannung uSt erzeugt, die als Gegenspannung zur transformierten Fahrdrahtspannung uN bzw. zur Spannung am Fahrdraht uf wirksam ist und den eingezeichneten Strom iq bzw. ift bestimmt. Da die Stellerspannung ust keinen analogen sinus-förmigen Verlauf hat, sondern durch breitenmoduliertes Pulsen erzeugt wird, tritt ein Oberschwingungsbehafteter Stromverlauf auf. Die Deutschen Bahnen verlangen am Netz weitgehend die Einhaltung eines cos ϕ = 1 (Phasenwinkel 0) bzw. cos ϕ = -1 und darüberhinaus existieren weitere Anforderungen und Randbedingungen für nur begrenzt zulässige Netzrückwirkungen (vgl. z.B. Elektrische Bahnen 1992, H.10,S.319-327).

Von Netzrückwirkungen wird gesprochen, wenn von einem Stromrichter neben dem eigentlich gewünschten Strom (in der Regel der Grundschwingung) noch weitere Stromanteile - harmonische bzw. Störströme - in das Netz eingespeist werden. Netzrückwirkungen können - wie bereits angeführt - durch die pulsende Arbeitsweise von Umrichtern verursacht werden, aber auch durch das Netz selbst, wenn es Spannungsharmonische enthält, die in einem am Netz betriebenen Stromrichter Ströme entsprechender Frequenz zur Folge haben.

Von besonderer Bedeutung bei den Netzrückwirkungen von Bahnantrieben sind Ströme einiger spezieller diskreter Frequenzen, die für den Betrieb von Signal- und Sicherungsanlagen verwendet werden und diese nicht stören dürfen. Im Bereich der Deutschen Bahnen sind dies die Frequenzen 42 Hz und 100 Hz. Diese Frequenzen dürfen im Netzstrom eines Triebfahrzeuges nur bis zu einem genau definierten Pegel vorhanden sein. Der Anteil dieser Frequenzen im Netzstrom wird mittels einer speziellen Meßtechnik (vgl. bereits genannte Zeitschrift Elektrische Bahnen, 1992, H. 10, S. 319 - 327) erfaßt und bei Meß- und Abnahmefahrten aufgezeichnet. Die Erfassung dieser Störströme erfolgt bei derartigen Messungen allerdings nicht nur für die zu untersuchende diskrete Frequenz (d.h. mit Bandbreite Null), sondern aufgrund der beschränkten Flankensteilheit der bei solchen Messungen eingesetzten Filter mit einer von Null verschiedenen Bandbreite. Dies bedeutet, daß auch Frequenzen, die innerhalb eines gewissen Abstandes von der zu untersuchenden Frequenz liegen, das Meßergebnis beeinflussen.

Verschiedene Netzrückwirkungen können in begrenztem Umfang schon passiv bei der Auslegung eines Antriebssystems berücksichtigt werden, da sie u.a. von den verwendeten Spannungen, Pulsfrequenzen und Induktivitäten abhängen. Des weiteren können sie auch u.U. - je nach Frequenz - über den in Fig. 2 eingezeichneten Störstromfiltersatz 3 beeinflußt und gemindert werden.

Dies bezieht sich allerdings nicht ausreichend auf die genannten niederfrequenten schmalbandigen Störströme mit Frequenzen, wie sie bei den Signal- und Sicherungsanlagen verwendet werden, z.B. im Bereich der DB 42 Hz, 100 Hz. Hier hat sich bereits eine aktive Einwirkung durch den Stromrichter (Vierquadrantensteller 1) zur Reduzierung von 100 Hz-Störströmen im Netzstrom als sinnvoll erwiesen. Dazu wird eine spezielle Regelung eingesetzt, die der für den Betrieb des Vierquadrantenstellers erforderlichen Regelung integriert wird. (vgl. z.B. IFAC Control in power electronics and electrical drives, Lausanne, 1983, Aufsatz K. Gemmeke " Suppression of narrow-band harmonics in the input current of traction vehicles).

Diese aktive Regelung stellt nachweislich sicher, daß die Anforderungen hinsichtlich des 100 Hz-Anteils im Netzstrom eingehalten werden und reagiert auf die 100 Hz-Anteile im Netzstrom bzw. im Transformator-Primärstrom gleich welcher Ursache. Sie macht keinerlei Voraussetzungen hinsichtlich stationärer Verhältnisse des 100 Hz-Störstromes nötig.

Etwas anders stellen sich die Verhältnisse bei den 42 Hz-Störströmen dar. Die Frequenz 42 Hz ist kein ganzzahliges Vielfaches der Bahn-Netzfrequenz von 16 2/3 Hz, so daß hier nicht von einer Harmonischen gesprochen werden kann. Daß eine auf 42 Hz eingestellte Meßeinrichtung - wie oben erwähnt - dennoch einen Meßwert liefert, liegt u.a. an der schon angesprochenen von Null verschiedenen Bandbreite dieser Meßeinrichtungen, wodurch auch Störströme mit einer Frequenz von 50 Hz (der 3. Harmonischen der Netzfrequenz) erfaßt und u.U. einen über den zulässigen Wert liegenden Meßwert bewirken. Der Entstehungsmechanismus der 3. Stromharmonischen hängt ua. mit den Vorgängen im Transformator (Magnetisierungsstrom bei hoher magnetischer Ausnutzung) zusammen. Die 3. Harmonische im Netzstrom kann damit als eine weitgehend stationäre oder nur langsam veränderliche Größe angesehen werden. Hier setzt die Erfindung an. Über diese 3. Harmonische lassen sich auch die 42 Hz-Störströme mitverringern.

Eine aktive Reduzierung der 3.Harmonischen (50 Hz) im Netzstrom könnte an sich prinzipiell auf die gleiche Weise wie die vorher beschriebene bekannte Reduzierung der 6. Harmonischen (100 Hz) erfolgen. Nachteil dabei ist dann allerdings, daß aus regelungstechnischen Gründen die gleichzeitige Reduzierung mehrerer Harmonischer (d.h. hier 100 Hz und 50 Hz) im Netzstrom die genügende Reduzierung der einzelnen Harmonischen erschwert.

Aufgabe der Erfindung ist es, hier Abhilfe zu schaffen und ein einfaches Verfahren zu erstellen, mit dem das aufgezeigte Problem gelöst werden kann. Das erfindungsgemäße Verfahren soll auch kombiniert mit dem bekannten Verfahren für 100 Hz-Störströme einsetzbar sein, dabei sollen jedoch die Reduzierungsmöglichkeiten der zusätzlichen Frequenz, hier insbesondere des 50 Hz-Anteils im Hinblick auf die Dämpfung des 42Hz-Störstrom-Meßwertes im Netzstrom, erhalten bleiben und nicht beeinträchtigt werden.

Diese Aufgabe wird gemäß der Erfindung entsprechend den kennzeichnenden Merkmalen des Anspruches 1 gelöst.

Vorteilhafte Ausgestaltungen sind den Unteransprüchen entnehmbar.

Grundgedanke der Erfindung ist es, den vom Vierquadrantensteller 1 gelieferten Strom so zu regeln, daß der Netzstrom (if vgl. Fig. 2) in idealer Weise keine 3. Harmonische mehr enthält und deshalb auch der Meßwert für die Signalfrequenz 42 Hz stark verringert wird. Es können ggf. zusätzlich noch eine oder mehrere andere Harmonische ausgewählt werden. Bei einer 3. Harmonischen im Netzstrom liefert der Vierquadrantensteller 1 einen entsprechenden Strom der gleichen Frequenz und definierter Phasenlage zur Kompensation, so daß stationär der Anteil der 3. Harmonischen im Netzstrom Null wird. Dies erfolgt unabhängig von der Ursache der 3. Harmonischen im Netzstrom. Da die 3. Harmonische stationär bzw. nur langsam veränderlich verläuft, kann eine entsprechend langsamere Regelung nach einem anderen Prinzip als die schon bekannte Regelung zur Reduzierung der 6. Harmonischen und ohne deren Beeinflussung erfolgen. Damit entfällt der schon erwähnte Nachteil bei gleichzeitiger Anwendung nur eines Prinzips auf zwei diskrete Frequenzen, daß die erzielbare Dämpfung der interessierenden Störströme dann deutlich geringer ausfällt als bei einer Reduzierung nur einer Stromharmonischen.

Anhand der Zeichnung wird in schematischer Darstellung die Erfindung näher erläutert.

Es zeigen:
- Fig. 1: die neue Regelkreisstruktur
- Fig. 2: eine bekannte Anordnung für ein Antriebssystem (schon beschrieben)

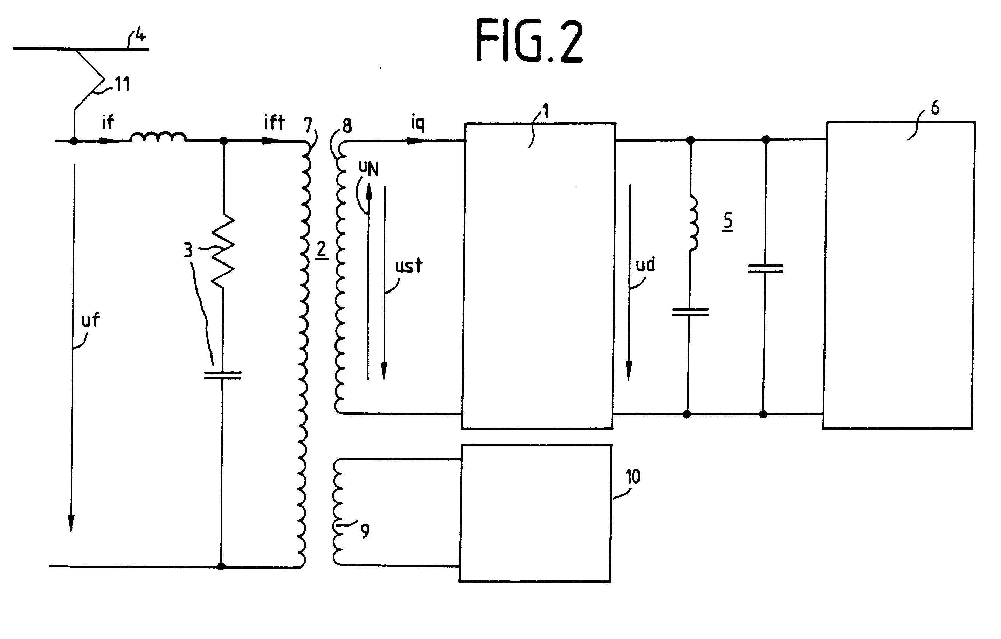

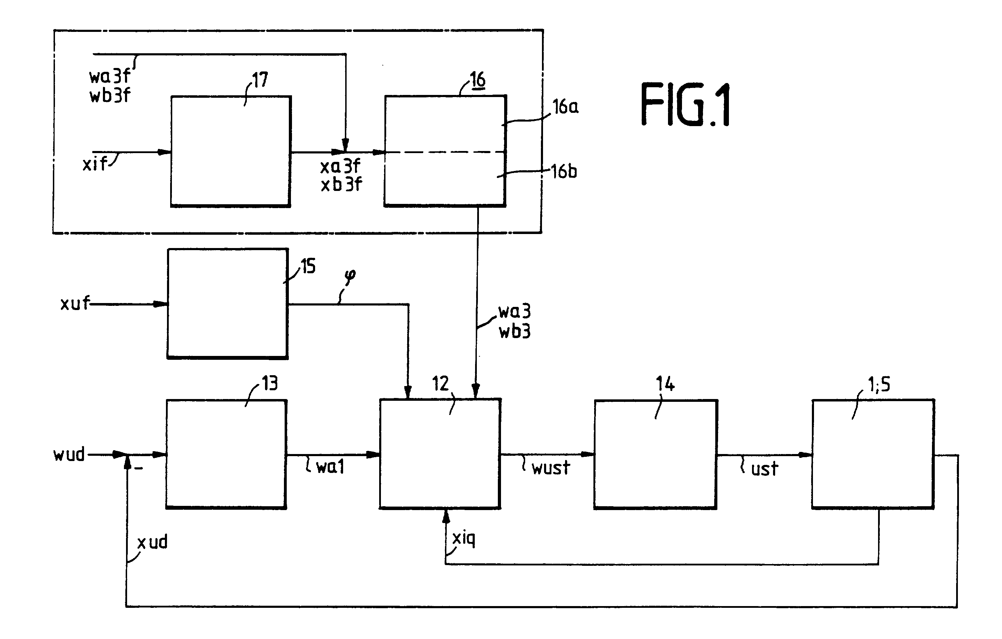

Fig. 1 zeigt die neue Regelkreisstruktur. Man erkennt zunächst allgemein übliche Funktionsblöcke der Stromregelung des Vierquadrantentstellers 1 mit Zwischenkreis 5. In dieser Stromregelung wird ein Stromregler 12 (z.B. P-Regler) von einem Zwischenkreis-spannungsregler 13 (z.B. PI-Regler) über dessen Ausgangsgröße wa1 (Wirkstromsollwert) geführt und bewirkt über einen Pulsmodulator 14 (zur Pulsmustererzeugung) eine Veränderung der vom Vierquadrantensteller 1 wirksamen Stellerspannung ust. Die Stromregelung stellt hierbei sicher, daß ein geforderter Strom gleich welcher Phasenlage zur Fahrdrahtspannung auch wirklich im Vierquadrantensteller 1 fließt. Ausgangsgröße des Stromreglers 12 ist die vom Vierquadrantensteller 1 an der Transformator-Sekundärwicklung 8 zu realisierende Spannung wust.

Der übergeordnete Zwischenkreis-Spannungsregler 13 sorgt über den Stromregler 12 für eine Regelung der Gleichspannung des Zwischenkreises, deren Istwert xud ständig mit einem Sollwert wud verglichen und die Differenz dem Spanungsregler 13 zugeführt wird. Diese übergeordnete Regelung sorgt für eine konstante Zwischenkreisspannung ud und liefert als Ergebnis ein Maß für den Wirkanteil wa1 des Stromes (d.h. den in Phase zur Netzspannung liegenden Anteil).

Eine Netzsynchronisationsstufe 15 liefert zudem aus Meßwerten xuf der Fahrdrahtspannung uf Schätzwerte für die jeweils aktuellen Phasenwinkel ϕ mit Wirkung auf den Stromregler 12, der die Pulsmodulatorstufe 14 für auszugebende Pulsmuster ansteuert. In der Pulsmodulatorstufe 14 wird die vom Stromregler 12 geforderte Spannung wust an den Transformator-Sekundärklemmen mittels eines geeigneten Verfahrens (z.B. mittels der bekannten Pulsweitenmodulation) durch eine pulsförmige Spannung ust approximiert. Dieser grundsätzlichen Regelkreisstruktur ist jetzt nach der Erfindung die strichpunktiert hervorgehobene Anordnung zugeordnet, bestehend aus einer als Block dargestellten Störstromregelung 16 mit Reglern 16a/16b (z.B. PI-Reglern) und einer vorgeschalteten Analysierstufe 17 (z.B. für eine diskrete Fourier-Transformation).

Nach der Erfindung wird in der Analysierstufe 17 aus Meßwerten des im Fahrdraht fließenden Netzstromes if (zweckmäßig direkt am Stromabnehmer 11 abzunehmen) ggf. auch des Transformator-Primärstromes ift mittels einfacher digitaler Verfahren periodisch der Anteil der hier 3. Stromharmonischen z.B. in Form der Fourierkoeffizienten xa3f und xb3f für die beiden orthogonalen sinus- und cosinus-förmigen Anteile der Stromharmonischen über eine Netzperiode ermittelt. Das gröbere Zeitraster einer Netzperiode erklärt auch die eingangs erwähnte Anwendungsbeschränkung dieses Verfahrens auf stationäre bzw. langsam veränderliche Störströme. Die genannten Störstrom-Wirk- und Blindanteile werden in der eigentlichen Regelung getrennt in zwei identischen Störstromreglern 16a, 16b mit jeweiligen Sollwerten wa3f und wb3f (vorzugsweise mit Null) verglichen und so geregelt, daß stationär diese Sollwerte eingehalten werden. Die Störstromregelung 16 liefert Sollwerte wa3 und wb3 für die vom Vierquadrantensteller 1 einzustellenden gegenwirkenden Stromharmonischen an den Stromregler 12, der diese dann realisiert.

Durch Messung des Stromes direkt am Stromabnehmer 11, kann der Einfluß von Störstromfiltersatz 3 und den Hilfsbetriebeumrichtern 10 miterfaßt werden.

Die Störstromregelung nach der Erfindung stellt praktisch keinen zusätzlichen Aufwand bei der Realisierung der Vierquadrantensteller-Regelung dar. Der Meßwert des Fahrdrahtstromes if wird ohnehin aus Gründen der Überwachung ermittelt. Will man diesen nicht explizit der Vierquadrantensteller-Regelung zur Verfügung stellen, so kann man statt dessen auch den Meßwert ift des Transformator-Primärstromes verwenden. Dieser ist dem Algorithmus der Vierquadrantensteller-Regelung im allgemeinen ebenfalls bekannt, da er schon für eine aktive Störstromkompensation (z.B. Dämpfung von 100 Hz-Anteilen im Strom) verwendet wird. Dieser Ansatz hat allerdings den Nachteil, nur die Einflüsse der Hilfsbetriebeumrichter 10 auf den Blindstrom am Fahrdraht und nicht auch den des Störfiltersatzes 3 ausregeln zu können.

## Patentansprüche

1. Verfahren zur Regelung eines in Anwendung bei fahrleitungsgespeisten Drehstromlokomotiven als Netzstromrichter fungierenden Vierquadrantenstellers (1), der ausgangsseitig über einen Gleichspannungs-Zwischenkreis (5) und Pulswechselrichter (6) auf Drehstromantriebe speist und der eingangsseitig an ein Wechselspannungsnetz (4) über einen Mehrwicklungs-Transformator (2) mit Sekundärwicklungen (8, 9) für den Vierquadrantensteller (1) und zusätzliche Verbraucher (10) und einen Störfiltersatz (3) angeschlossen ist, mit einer Erfassung des Fahrdrahtstromes und seiner Transformation in Stromkomponenten,
**dadurch gekennzeichnet,**
daß die Stromregelung des Vierquadrantenstellers (1) durch eine Störstromregelung (16) ergänzt wird, die auf eine zu reduzierende Stromharmonische im Fahrdrahtstrom (if) abgestimmt ist, diese periodisch erfaßt und die Stromharmonische in geeigneter Weise in Wirk- und Blindanteile, in Form zweier orthogonaler Komponenten oder nach Betrag und Winkel,zerlegt und die dann getrennten Regelkreisen der Störstromregelung (16) zugeführt werden, die auf Einhaltung definierter Sollwerte (wa3f, wb3f), vorzugsweise Null regeln und ausgangsseitig Sollwerte (wa3, wb3) für vom Vierquadrantensteller (1) einzustellende Komponenten der Stromharmonischen liefern.

2. Verfahren nach Anspruch 1,
**dadurch gekennzeichnet,**
daß dem von einem Zwischenkreis-Spannungsregler (13) geführten Stromregler (12) innerhalb einer herkömmlichen Regelkreisstruktur für die Stellerspannung (ust) am Vierquadrantensteller (1), bestehend aus netzsynchronisiertem (15) Stromregler (12), Pulsmodulator (14) und Vierquadrantensteller (1), eine Störstromregelung (16) beigeschaltet wird, die in getrennten Kreisen mit 2 Störstromreglern (16a,16b) ausgestattet ist, die den Stromregler (12) mit additiven Sollwerten für die Wirk- und Blindanteile des Störstromes (wa3,wb3) steuern, wie sie sich aus Vergleichen von gemessenen bzw. in einer Analyseanordnung (17) ermittelten Störstromanteilen (xa3f, xb3f) und vorgegebenen Störstromsollwerten (wa3f, wb3f) ergeben.

3. Verfahren nach Anspruch 1 oder 2,
**dadurch gekennzeichnet,**
daß über die Reduzierung der 3. Stromharmonischen eine aktive Dämpfung der 42 Hz-Störstromfrequenz erfolgt.

4. Verfahren nach einem der vorhergehenden Ansprüche,
**dadurch gekennzeichnet,**
daß es bedarfsweise auf andere als als die 3. stationär im Netzstrom befindliche Harmonische anwendbar ist.

5. Verfahren nach einem der vorhergehenden Ansprüche,
**dadurch gekennzeichnet,**
daß es mit entsprechend oft vorhandenen Störstromregelungen (16) und Analyseanordnungen (17) auf mehrere Störfrequenzen gleichzeitig anwendbar ist.

## Claims

1. Method for the regulation of a four-quadrant regulator (1), which functions as mains current converter in the application to polyphase altemating current locomotives fed by overhead line and which at the output side feeds polyphase alternating current drives by way of an intermediate direct voltage circuit (5) and pulse-controlled inverter (6) and at the input side is connected to an altemating voltage mains (4) by way of a multiwinding transformer (2) with secondary windings (8, 9) for the four-quadrant regulator (1) and additional loads (10) and an interference filter set (3), with a detection of the overhead wire current and its conversion into current components, characterised thereby, that the current regulation of the four-quadrant regulator (1) is augmented by an interference current regulation (16), which is tuned to a current harmonic to be reduced in the overhead wire current (if), detects this harmonic periodically and resolves it in suitable manner into real and reactive components in the form of two orthogonal components or according to amplitude and phase angle, which are then fed to separate regulating loops of the interference current regulation (16), which loops then regulate towards the maintenance of defined target values (wa3f, wb3f), preferably zero, and at the output side deliver target values (wa3, wb3) for components of the current harmonic, which are to be set by the four-quadrant regulator (1).

2. Method according to claim 1, characterised thereby, that an interference current regulation (16), which in separate loops is equipped with 2 interference current regulators (16a, 16b), which control the current regulator (12) by additive target values for the real and reactive components of the interference current (wa3, wb3) as result from comparisons of interference current components (xa3f, xb3f), which are either measured or ascertained in an analysis arrangement, and preset interference current target values (wa3f, wb3f), is connected with the current regulator (12), which is controlled by an intermediate loop voltage regulator (13), within a conventional regulating loop structure for the regulator voltage (ust) at the four-quadrant regulator (1), consisting of the current regulator (12) synchronised by the mains (15), a pulse modulator (4) and the four-quadrant regulator (1).

3. Method according to claim 1 or 2, characterised thereby, that an active attenuation of the 42 hertz interference current frequency takes place by way of the reduction of the third current harmonic.

4. Method according to one of the preceding claims, characterised thereby, that it is in case of need applicable to other than the third harmonic steadily present in the mains current.

5. Method according to one of the preceding claims, characterised thereby, that it is usable for several interference frequencies at the same time with appropriately often present interference current regulations (16) and analysis arrangements (17).

## Revendications

1. Procédé de régulation d'un transducteur opérant sur les quatre quadrants (1), jouant le rôle de convertisseur du courant du réseau, d'une locomotive à courant triphasé alimentée par caténaire, qui, côté sortie, alimente, par l'intermédiaire d'un circuit intermédiaire à tension redressée (5) et d'onduleurs pulsatoires (6), des mécanismes d'entraînement sur courant triphasé et, côté entrée, est relié à un réseau à tension alternative (4) par l'intermédiaire d'un transformateur à plusieurs bobinages (2) dont des bobinages secondaires (8, 9) sont prévus pour le transducteur opérant sur les quatre quadrants (1) et pour des convertisseurs auxiliaires (10), ainsi que par l'intermédiaire d'un filtre antiparasite (3), comportant une saisie du courant du fil de la caténaire et sa transformation en composantes du courant,
caractérisé
par le fait que la régulation du courant du transducteur opérant sur les quatre quadrants (1) est complétée par une régulation (16) du courant parasite qui est accordée sur un harmonique, à réduire, qui se trouve dans le courant (if) fourni par le fil de la caténaire, qui saisit périodiquement cet harmonique et qui décompose l'harmonique du courant, de façon appropriée, en composantes active et réactive, sous forme de deux composantes orthogonales ou en valeur absolue et valeur angulaire, qui sont alors amenées à des circuits de régulation distincts de la régulation (16) du courant parasite, qui opèrent la régulation en respectant des valeurs prescrites définies (wa3f, wb3f), de préférence la valeur zéro, et, côté sortie, fournissent des valeurs prescrites (wa3, wb3) pour les composantes des harmoniques du courant que doit traiter le transducteur opérant sur les quatre quadrants (1).

2. Procédé selon la revendication 1,
caractérisé
par le fait qu'à côté du régulateur de courant (12), guidé par un régulateur de tension (13) du circuit intermédiaire, à l'intérieur d'une structure traditionnelle de circuit de régulation pour la tension (ust) qui arrive au transducteur opérant sur les quatre quadrants (1), constituée d'un régulateur de courant (12) synchronisé avec le réseau (15), d'un modulateur d'impulsion (14) et d'un transducteur opérant sur les quatre quadrants (1), est mise en circuit une régulation (16) du courant parasite qui est équipé, dans des circuits distincts, de 2 régulateurs (16a, 16b) du courant parasite qui commandent le régulateur de courant (12) avec des valeurs prescrites additives pour les composantes active et réactive du courant parasite (wa3, wb3), telles qu'elles résultent d'une comparaison des composantes (xa3f, xb3f) du courant parasite mesurées ou déterminées dans un dispositif d'analyse (17) et des valeurs prescrites (wa3f, wb3f) pour le courant parasite.

3. Procédé selon la revendication 1 ou 2,
caractérisé
par le fait qu'en plus de la réduction des 3emes harmoniques se fait une atténuation active de la fréquence 42Hz du courant parasite.

4. Procédé selon l'une des revendications précédentes,
caractérisé
par le fait qu'au besoin on peut l'appliquer de façon permanente à des harmoniques du courant du réseau autres que le troisième.

5. Procédé selon l'une des revendications précédentes,
caractérisé
par le fait qu'il peut s'appliquer simultanément sur plusieurs fréquences parasites avec des régulations (16) du courant parasite et des dispositifs d'analyse (17) souvent existants.
